Europäisches Patentamt

European Patent Office

Office européen des brevets

(11) Publication number: **0 269 521 B1**

# EUROPEAN PATENT SPECIFICATION

(45) Date of publication of patent specification: **14.08.91**  (51) Int. Cl.⁵: **F02F 3/02**

(21) Application number: **87402642.0**

(22) Date of filing: **24.11.87**

(54) Method of making a light metal piston for an internal combustion engine.

(30) Priority: **25.11.86 JP 179773/86**

(43) Date of publication of application:
**01.06.88 Bulletin 88/22**

(45) Publication of the grant of the patent:
**14.08.91 Bulletin 91/33**

(84) Designated Contracting States:
**DE FR GB IT**

(56) References cited:
**DE-B- 1 294 739**
**DE-C- 539 906**
**FR-A- 2 321 049**

(73) Proprietor: **IZUMI AUTOMOTIVE INDUSTRY COMPANY LIMITED**
**620 Oaza Onakai**
**Kawagoe-shi Saitama-ken(JP)**

(72) Inventor: **Ogiwara, Tosio**
**4-6-19, Mochida**
**Gyoda-shi Saitama-ken(JP)**
Inventor: **Kudou, Masaaki**
**391-8, Ooaza Muraoka**
**Kumagaya-shi Saitama-ken(JP)**

(74) Representative: **Rodhain, Claude et al**
**30, rue La Boétie**
**F-75008 Paris(FR)**

## Description

## FIELD OF THE INVENTION

The present invention relates to a method of making a light metal piston for internal combustion engines which has a pair of steel inserts cast-in on the inside of the piston skirt in order to control thermal expansion of the piston skirt.

## BACKGROUND OF THE INVENTION

DE. C. 539906 discloses a light metal piston for internal combustion engine having a crown, a skirt and a pair of gudgeon pin bosses, and a pair of inserts made of a material of lower thermal expansion than that of the light metal, such as steel, and shaped so that at least part of the insert conforms to the inside shape of the piston skirt, whereby to form a bi-metallic element with the light metal of the piston in order to control the expansion of the piston skirt, when the piston is heated during engine operation, each insert having a pair of bands extending around the inside of the piston skirt from the region of the gudgeon pin boss, and the bands of said pair being joined by a connecting portion of the insert in the region of the gudgeon pin boss.

In a prior method of making such a piston, permanent magnets are firmly fixed in recesses of the mold core where the inserts are to be set, and the inserts are positioned firmly on the mold core during casting operation by the magnetic force. However, the magnetic force decreases gradually due to high temperature during casting operation and then the inserts tend to fall off from the mold core when a molten metal is poured into the mold cavity.

When the piston is cast by squeeze casting process in which a very high pressure around 1,000kg/cm2 is applied in the molten metal, the heat flux from the molten metal into the mold core is accelerated because of better contact between the molten metal and the mold core. Therefore, the magnet is exposed to higher temperature and the magnetic force decreases very rapidly. Consequently, the magnet on the mold core for squeeze casting must be replaced at every 500 to 1000 casting cycles, which increases the production cost of the squeeze-cast piston with cast-in steel inserts remarkably.

In a second prior method of making such a piston, two setting pins per one insert are fixed in the mold core. Two setting holes are drilled at the corresponding position of the insert, and the inserts are positioned on the mold core by the engagement of setting pins on the mold core and holes of the inserts.

In gravity die casting process, the mold core for the piston is normally divided into several pieces, so that the mold core can be freely taken out from the piston casting after the molten metal solidifies, even if the piston inside has under-cut portions or if there is such engagement of setting pins and holes of the inserts.

In case of squeeze casting process, the mold core must be of one piece, because a very high pressure on the molten metal would press the melt into every gaps between the divided mold core pieces, which would hinder the mold core from taking out from the piston casting. Thus, it is impossible to apply such setting pins for casting pistons with steel inserts by squeeze casting process.

## SUMMARY OF THE INVENTION

It is therefore an object of the present invention to avoid the above-mentioned problems and other disadvantages of conventional methods of making a light metal piston for internal combustion engines of the type discussed above.

More particularly, it is an object of the invention to provide for a completely new and improved method of making a light metal piston with expansion controlling steel inserts which does not require the conventional setting devices for steel inserts any more, and which offers the easy and reliable setting of steel inserts.

According to the present invention, a method for making a light metal piston for the internal combustion engines according to claim 1 is provided.

Consequently, in the present invention, falling off of the inserts during casting operation is completely eliminated. In addition, maintenance costs of the mold can be drastically reduced, because it is not necessary to replace the magnets or setting pins for fixing the inserts to the mold core in the prior methods. Furthermore, automatic setting of the inserts can now be introduced to reduce production cost, because the setting operation is very simple and reliable.

The above and other objects, features and advantages of the present invention will become more apparent from the following description when taken in conjunction with the accompanying drawings in which a number of preferred embodiments of the present invention are shown by way of illustration examples.

## BRIEF DESCRIPTION OF THE DRAWINGS

Fig. 1 is a longitudinal cross-section of a piston according to the present invention.
Fig. 2 is a section on the line II-II of Fig. 1.

Fig. 3 is an elevation view of a first preferred embodiment of an insert for use in the piston according to the invention.

Fig. 4 is a plane view of the insert of Fig. 3.

Fig. 5 is an elevation view of a second preferred embodiment of an insert for use in the piston according to the invention.

Fig. 6 is a plane view of the insert of Fig. 5.

Fig. 7 is a plane view of fixing the insert to the mold core according to the invention.

## DETAILED DESCRIPTION OF THE PREFERRED EMBODIMENTS

A number of embodiments of the present invention will now be described with reference to the accompanying drawings.

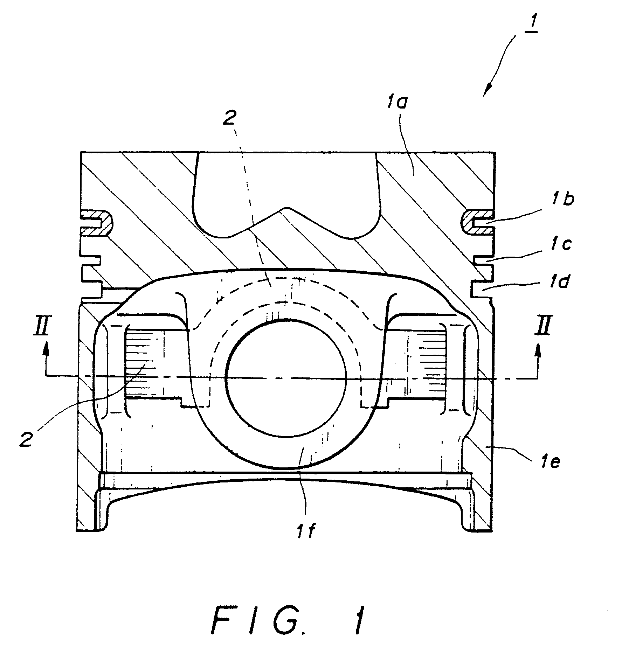

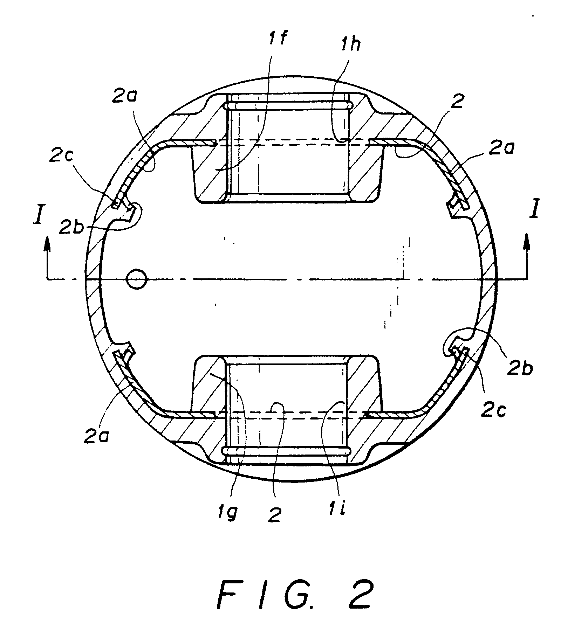

As shown in Figs. 1 and 2, the piston 1 has a crown 1a, ring groove bands 1b, 1c and 1d around the periphery of the crown 1a, and a skirt 1e integrally connected to the crown 1a. The piston 1 has a pair of gudgeon pin bosses 1f, 1g which are formed so as to extend inwardly from the piston skirt 1e and which are connected to the crown 1a by a pillar on the piston skirt 1e. Bores 1h, 1i to receive the gudgeon pin are formed in the bosses 1f, 1g respectively. The piston 1 is made of light metal, for example, aluminium alloy or magnesium alloy, and is provided with a pair of inserts 2, 2 made of sheet steel, extending circumferentially away from the gudgeon pin bosses 1f, 1g, in order to control thermal expansion of the piston skirt 1e which results from the heating of the piston 1 from room temperature to its operating temperature in an engine.

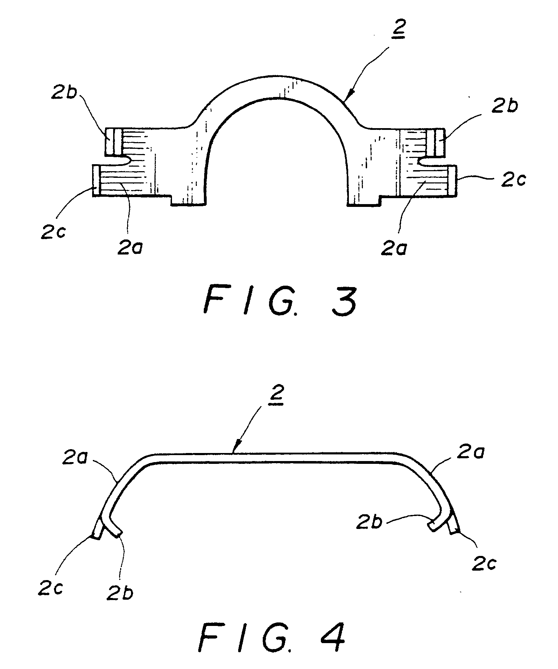

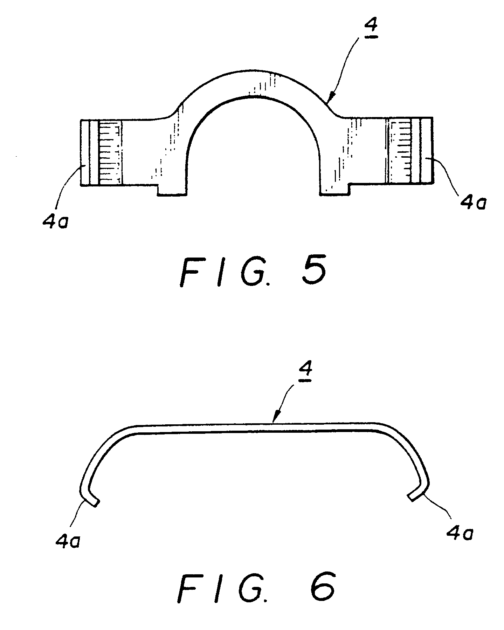

The inserts 2, 4, shown in Figs. 3 and 5, consist of a pair of bands extending circumferentially around the inside of the piston skirt 1e, and a connecting portion joining the two bands.

At least a portion of the free end 2a of each band 2b, 2c is bent inwardly by an angle of about 90 degree.

The radial length of the bent portions 2b, 4a should not be less than the thickness of the insert, because the bending of the insert becomes difficult and the holding force of the bent portions 2b, 4a during casting becomes weaker. The maximum radial length of the bent portions 2b, 4a should not exceed 10 times the thickness of the insert 2, because the holding force of the bent portions 2b, 4a does not increase any more and the snapping of the insert 2 at the mold core becomes more difficult.

The vertical length of the bent portions 2b, can be varied depending on the circumstances, for example only a part of the free end can be bent to ease the bending operation.

If only an upper half 2b of the free end should be bent as shown on Fig. 3, it would be better to cut out the boundary area between the bent portion 2b and the not-bent portion 2c, in order to ease the bending operation and to eliminate the sharp edge at the boundary area which may cause cracks in the piston 1.

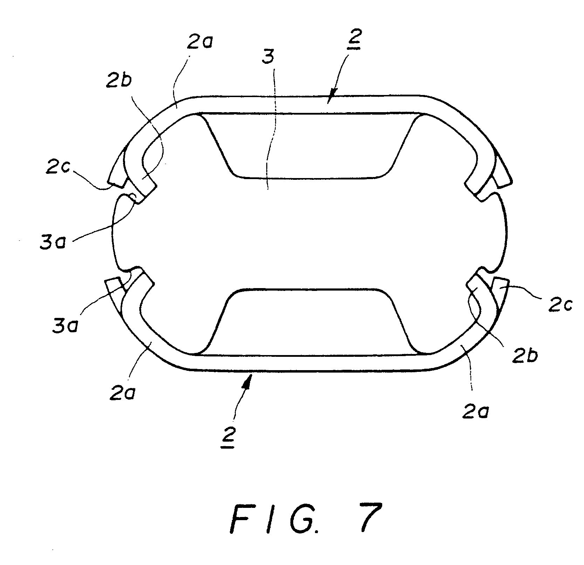

Shown in Fig. 7, on the mold core 3, the grooves 3a, 3a are provided to accept the bent portions 2b, 2b of the insert 2. The inserts 2, 4 are pressed against the mold core 3 and the inner faces 2d of the bent portions 2b, 2b snap it at the grooves 3a, 3a on the mold core 3, whereby to sustain the inserts 2, 4 firmly on the mold core 3 by the elasticity of the steel inserts 2, 4, and a molten metal is poured into the mold 3 to form the piston 1.

Fig.5 shows a second preferred embodiment of the insert 4 according to the present invention which is identical with that of Fig. 3, except that the entire vertical length of the free end is bent inwardly.

As mentioned above, according to the present invention, falling off of the inserts 2, 4 during casting operation is completely eliminated, and maintenance costs of the casting mold can be drastically reduced, because it is not necessary to replace the magnets or setting pins for fixing the inserts to the mold core. In addition, automatic setting of the inserts can be introduced to reduce production cost because the setting operation is very simple and reliable.

Furthermore, this method of holding the inserts on the mold core can be applied to cast pistons by gravity die casting or squeeze casting, but it is more advantageous to apply it to the squeeze casting process, because conventional method of holding the inserts on the mold core during casting cannot be applied economically to the piston production.

## Claims

1. A method for making a light metal piston for internal combustion engine, said piston having a crown (1a), a skirt (1e) integrally connected to said crown, a pair of gudgeon pin bosses (1f,1g) and a pair of expansion control inserts (2,4) made of a material of lower thermal expansion coefficient than that of the light metal, each insert (2,4) conforming to the internal shape of the piston skirt (1e) to form a bimetallic element therewith, **characterized** by including the steps of:

preparing said pair of inserts (2,4), with each having a pair of bands (2a,4a) joined by a connecting portion, and bend portions (2b,2c) at free ends of said bands, said bend portions being bend inwardly;

preparing a mold core (3) so as to have a plurality of grooves (3a) to accept said bent portions;

pressing said inserts (2,4) on the mold core;

snapping the inner faces of said bend portions (2b) in said grooves on said mold core;

setting said inserts (2,4) to said mold core by the elasticity of said inserts,

casting said piston by means for casting.

2. A method as claimed in claim 1, wherein said bent portions of said insert (2) are bent inwardly at an upper half of said free ends.

3. A method as claimed in claim 1 wherein said bent portions of said insert (4) are bend inwardly over the entire width of said free ends.

4. A method as claimed in claims 2 and 3, wherein the radial length of said bent portions in radial direction of the piston should not be less than the thickness of said insert.

5. A method as claimed in claims 2 and 3, wherein the maximum radial length of said bent portions in piston radial direction should not exceed 10 times the thickness of said inserts.

6. A method as claimed in claim 2, wherein said free ends of said inserts (2) are cut out at a boundary area between each said bent portion (2b) and corresponding not-bent portion (2c).

7. A method as claimed in claims 2 and 3 wherein said bent portions are bent by an angle between 60° and 120°.

8. A method as claimed in any one of claims 1 to 7 wherein means for casting said piston comprises squeeze casting process.

**Revendications**

1. Procédé de fabrication d'un piston en métal léger pour moteur à combustion interne, le dit piston ayant une tête (1a), une jupe (1e) reliée d'un seul tenant à la dite tête, une paire de bossages d'axe de piston (1f, 1g) et une paire d'inserts (2, 4) de contrôle de la dilatation réalisés dans un matériau de coefficient de dilatation thermique inférieur à celui du métal léger, chaque insert (2, 4) se conformant à la forme interne de la jupe de piston (1e) afin de former aveo celle-ci un élément bimétallique, caractérisé par les étapes de :

préparation de la dite paire d'inserts (2, 4), chacun ayant une paire de bandes (2a, 4a) reliées par une partie de raccordement, et des parties repliées (2b, 2c) aux extrémités libres des dites bandes, les dites parties repliées étant pliées vers l'intérieur;

préparation d'un noyau de moule (3) de façon à avoir plusieurs rainures (3a) destinées à recevoir les dites parties repliées;

appui des dits inserts (2, 4) sur le dit noyau de moule;

encliquetage des faces internes des dites parties repliées (2b) dans les dites rainures sur le dit noyau de moule;

positionnement des dits inserts (2, 4) sur le dit noyau de moule par l'élasticité des dits inserts,

coulée du dit piston par des moyens de coulée.

2. Procédé selon la revendication 1, dans lequel les dites parties repliées du dit insert (2) sont pliées vers l'intérieur au niveau d'une moitié supérieure des dites extrémités libres.

3. Procédé selon la revendication 1, dans lequel les dites parties repliées du dit insert (4) sont pliées vers l'intérieur sur toute la largeur des dites extrémités libres.

4. Procédé selon les revendications 2 et 3, dans lequel la longueur radiale des dites parties repliées dans la direction radiale du piston n'est pas inférieure à l'épaisseur du dit insert.

5. Procédé selon les revendications 2 et 3, dans lequel la longueur radiale maximum des dites parties repliées dans la direction radiale du piston n'excède pas 10 fois l'épaisseur des dits inserts.

6. Procédé selon la revendication 2, dans lequel les dites extrémités libres des dits inserts (2) sont entaillées au niveau d'une zone limite entre chaque partie pliée (2b) et la partie non pliée correspondante (2c).

7. Procédé selon les revendications 2 et 3, dans lequel les dites parties repliées sont pliées selon un angle entre 60° et 120°.

8. Procédé selon l'une quelconque des revendications 1 à 7, dans lequel les moyens destinés à couler le dit piston comportent un procédé de moulage par injection.

**Patentansprüche**

1. Verfahren zur Herstellung eines Leichtmetallkolbens für eine Brennkraftmaschine, welcher Kolben eine Krone (1a), einen mit dieser einstückig verbundenen Rand (1e), ein Paar von Kolbenstiftaugen (1f,1g) und ein Paar von Expansionsregeleinsätzen (2,4) aufweist, die aus einem Material mit einem geringeren thermischen Ausdehnungskoeffizienten gegenüber dem des Leichtmetalls gefertigt sind, wobei jeder Einsatz (2,4) mit der Innenform des Kolbenrandes (1e) übereinstimmt, um damit ein Bimetallelement zu bilden, gekennzeichnet durch folgende Verfahrensschritte:

Herstellen des Paares von Einsätzen (2,4) derart, daß jeder davon ein Paar von Abschnitten (2a,4a), die durch einen Verbindungsabschnitt verbunden sind, und Biegeabschnitte (2b,2c) an Freienden der vorgenannten Abschnitte aufweist, welche Biegeabschnitte einwärts gebogen sind;

Herstellen eines Formkerns (3) derart, daß er eine Vielzahl von Vertiefungen (3a) aufweist, um die Biegeabschnitte aufzunehmen;

Pressen der Einsätze (2,4) auf den Formkern;

Einschnappen der Innenflächen der Biegeabschnitte (2b) in die Vertiefungen am Formkern;

Haltern der Einsätze (2,4) am Formkern mittels der Elastizität der Einsätze,

Gießen des Kolbens mittels einer Gußvorrichtung.

2. Verfahren nach Anspruch 1, wobei die Biegeabschnitte des Einsatzes (2) an der oberen Hälfte der Freienden einwärts gebogen werden.

3. Verfahren nach Anspruch 1, wobei die ßiegeabschnitte des Einsatzes (4) über die gesamte Breite der Freienden einwärts gebogen werden.

4. Verfahren nach den Ansprüchen 2 und 3, wobei die radiale Länge der Biegeabschnitte in Radialrichtung des Kolbens nicht kleiner als die Stärke des Einsatzes ist.

5. Verfahren nach den Ansprüchen 2 und 3, wobei die maximale radiale Länge der Biegeabschnitte in Kolbenradialrichtung das Zehnfache der Stärke der Einsätze nicht überschreitet.

6. Verfahren nach Anspruch 2, wobei die Freienden der Einsätze (2) in einem Grenzbereich zwischen jedem Biegeabschnitt (2b) und dem entsprechenden nicht gebogenen Abschnitt (2c) herausgestanzt werden.

7. Verfahren nach den Ansprüchen 2 und 3, wobei die Biegeabschnitte in einem Winkel zwischen 60° und 120° gebogen werden.

8. Verfahren nach einem der Ansprüche 1 bis 7, wobei die Mittel zum Gießen des Kolbens einen Druckgußprozeß enthalten.

F I G. 1

F I G. 2

FIG. 3

FIG. 4

*4*

*4a*

*4a*

F I G. 5

*4*

*4a*

*4a*

F I G. 6

FIG. 7